# EUROPÄISCHE PATENTSCHRIFT

(11) **EP 3 441 207 B1**
(45) Veröffentlichungstag und Bekanntmachung des Hinweises auf die Patenterteilung: **13.05.2020**
(21) Anmeldenummer: 18187919.8
(22) Anmeldetag: 08.08.2018
(51) Int. Cl.: B28D 1/04, B23B 51/04, E21B 25/10, B26D 7/18, E21B 10/02, E03F 9/00, B26F 1/26, B26F 3/00, B24C 1/04, B08B 9/045

(54) **VERFAHREN ZUR AUSFÜHRUNG VON KERNBOHRUNGEN UND VORRICHTUNGEN ZU DESSEN AUSFÜHRUNG**
METHOD FOR CORE DRILLING AND DEVICES FOR SAME
PROCÉDÉ DE CAROTTAGE ET DISPOSITIFS DE MISE EN OEUVRE DUDIT PROCÉDÉ

(30) Priorität: 08.08.2017 DE 102017117963
(43) Veröffentlichungstag der Anmeldung: 13.02.2019
(73) Patentinhaber: Mauerspecht GmbH, 01640 Coswig (DE)
(72) Erfinder: Galinsky, Volker, 01640 Coswig (DE)
(74) Vertreter: Lippert Stachow Patentanwälte Rechtsanwälte Partnerschaft mbB

(56) Entgegenhaltungen:
- EP-A1- 2 295 709
- CN-A- 106 907 121
- GB-A- 686 778
- JP-A- H1 044 133
- JP-A- 2000 291 370
- US-A- 2 084 686

## Beschreibung

Die Erfindung betrifft Verfahren zur Ausführung von Kernbohrungen in einem Material mittels eines Bohrgeräts, welches eine Bohrkrone verwendet. Sie betrifft ebenso solche Bohrkronen, die mit einem hohlzylindrischen Kernrohr ausgebildet sind und am vorderen, dem Materialabtrag dienenden Ende des Kernrohrs Abtragselemente aufweisen, welche auf der Oberfläche des Kernrohres kranzförmig verteilt befestigt sind. Die Erfindung betrifft des Weiteren Vorrichtungen zur Beseitigung von Anhaftungen an der Innenfläche von Kanälen mittels Hochdruckstrahlen, die eine solche Bohrkrone aufweisen.

Bohrkronen sind bekannt als Werkzeug einer Bohrmaschine, mit welchem in ein massives Material, beispielsweise Beton, Naturstein, Mauerwerk, Keramik oder anderen, ein ringförmiger Spalt eingebracht, dann der zentral verbleibende Bohrkern vom Material gelöst und aus dem Loch entfernt wird.

Zur Erzeugung des ringförmigen Bohrloches umfasst die Bohrkrone einen hohlzylindrischen Körper, welcher als Kernrohr bezeichnet wird. Das Kernrohr weist an seinem vorderen Ende auf der Oberfläche verteilte Schneid- oder Schleifelemente auf, die hinsichtlich Material, Gestalt und Verteilung geeignet sind, Material in erforderlicher Art und Ausmaß abzutragen. Nachfolgend sollen die Schleif- und Schneidelemente allgemein als Abtragselemente bezeichnet sein. Die Abtragselemente können auf der kreisringförmigen Deckfläche des Kernrohres und/oder einem geeignet langen vorderen Abschnitt der inneren und/oder äußeren Mantelfläche des Kernrohres angeordnet sein. Das hintere Ende der Bohrkrone ist in bekannter Weise mittels geeigneter Verbindungsmittel mit der Werkzeugaufnahme einer externen Versorgungseinheit des Bohrgeräts koppelbar, welches die Bohrkrone verwendet. Die Versorgungseinheit und weitere Komponenten des Bohrgeräts, welche dem Betreiben und der Bedienung des Bohrgeräts dienen, sind dem jeweiligen Anwendungsfall angepasst und nicht Teil der Bohrkrone an sich. Die Verbindungsmittel sind entsprechend der Werkzeugaufnahme ausgebildet, so dass die Bohrkrone zu betreiben und insbesondere mit der gewünschten Geschwindigkeit drehbar ist. Geometrie und Materialien des Kernrohres und der Abtragselemente der Bohrkrone sind dem zu bohrenden Material und der Lochgröße sowie Lochtiefe entsprechend ausgebildet. Mit den bekannten Bohrkronen sind Bohrlöcher von wenigen Zentimetern bis mehreren 10 Zentimetern und mehr herstellbar.

Es sind Nass- und Trockenbohrungen möglich. Bei der Nassbohrung fließt ein Spülmittel innerhalb des Kernrohres und/oder außen am Kernrohr entlang in das Bohrloch, sodass das abgetragene Bohrgut weggespült und die Bohrkrone gekühlt werden kann.

Die Entfernung des Bohrkernes oder Abschnitte davon aus dem Bohrloch kann auf verschiedene Weise erfolgen. Häufig wird der Kern mechanisch oder durch seine Eigenlast in kurze Abschnitte gebrochen, die leichter, auch mit Hilfe des Spülmittels entfernt werden können. Aus der CN 106907121 A ist eine Bohrkrone bekannt, welche mittels Niederdruckwasser gekühlt wird und ergänzend eine Hochdruckwasserzuführ und Hochdruckdüsen aufweist, um einen in der Bohrkrone erzeugten Bohrkern am vorderen Ende der Bohrkrone abzuschneiden. Die CN 106907121 A offenbart ein Verfahren gemäß dem Oberbegriff des Anspruchs 1 und eine Bohrkrone gemäß dem Oberbegriff des Anspruchs 7.

Mit zunehmendem Durchmesser des Bohrkerns wird das Brechen oder Kürzen des Bohrkerns unkontrollierbarer sowie schwieriger und häufiger notwendig, sodass Ergebnis und Effizienz der Kernbohrung unzureichend werden oder anstelle einer Kernbohrung ein langwieriges Lochfräsen durchgeführt wird, da der Bohrkern nicht zu handhaben ist. Letzteres ist z. B. aus der Kanalsanierung bekannt, wenn ein Vollverschluss eines Abwasserkanals vorliegt, der sich mitunter über mehrere Meter erstrecken kann.

Es besteht daher der Bedarf nach einem Kernbohrverfahren und einer dafür verwendbaren Bohrkrone, mit welchen eine verbesserte Handhabung des Bohrkernes und ein effizienteres Bohren möglich sind. Zudem sollen das Verfahren und die Bohrkrone auch für nicht vertikale Bohrungen verwendbar sein, wie beispielsweise in nahezu horizontalen Bohrungen, wie sie bei der Kanalsanierung geführt werden.

Es besteht auch Bedarf, dass Verfahren und Vorrichtung für verschiedene Materialien und sowohl für vertikale als auch für horizontale Bohrverfahren einsetzbar ist sowie für Bohrlochgrößen bis ca. 1 m und größer.

Diese Aufgaben werden durch ein Verfahren nach Anspruch 1 und eine Bohrkrone nach Anspruch 7 gelöst.

Das Konzept der nachfolgend beschriebenen Vorrichtungen und der damit ausführbaren Verfahren sind dahingehend zu beschreiben, dass ein kombinierter Materialabtrag erfolgt und zwar jener mechanische Abtrag unter Ausbildung eines Bohrkerns, der sich im Inneren der Bohrkrone befindet in Verbindung mit einem Materialabtrag, welcher ein unter Hochdruck stehendes Strahlmedium verwendet, um auch am Bohrkern Material abzutragen.

Als Hochdruck für flüssige Strahlmedien sollen hier Drücke bezeichnet werden, die im Bereich von ca. 80 bar bis ca. 6000 bar und damit deutlich über den Drücken liegen, mit denen das Nassbohren ausgeführt wird. Der obere Druckbereich von größer 500 bar wird auch als Höchstdruck bezeichnet. Derzeit sind Pumpen bekannt, mit denen Drücke der Flüssigkeit von bis zu 6000 bar erreichbar sind, jedoch können bei diesen extremen Drücken Einschränkung durch die Medienzuführung zu den Düsen bestehen. Solche extremen Drücke werden beispielsweise bei stationären Flüssigkeitsstrahlvorrichtungen verwendet, die zum Trennen oder Schneiden von harten Werkstoffen verwendet werden. Bei flexiblen Flüssigkeitsführungen, wie beispielsweise verstärkten Kunststoffschläuchen, liegt die Obergrenze der maximal durch diese flexible Flüssigkeitsführung leitbaren Flüssigkeit derzeit bei ca. 3000 bar. Mit deren Weiterentwicklung sind durchaus auch höhere Drücke möglich und mit den nachfolgend beschriebenen Verfahren und Vorrichtungen nutzbar. Die Verfahren und die dazu verwendeten Vorrichtungen sind insbesondere auch zur Verwendung von Höchstdruck geeignet, so dass nachfolgend die Nennung von Hochdruck auch die Verwendung von Höchstdruck einschließt.

Nachfolgend werden zur Realisierung des Konzepts verwendete Verfahrens- und Vorrichtungsmerkmale beschrieben.

Zur Ausführung des Verfahrens des Kernbohrens wird eine Bohrkrone verwendet, die mit einem hohlzylindrischen Grundkörper, nachfolgend als Kernrohr bezeichnet, ausgebildet ist und am vorderen, dem Materialabtrag dienenden Ende des Kernrohrs Abtragselemente aufweist. Die Abtragselemente können beispielsweise Schneid- oder Schleifelemente oder andere Elemente sein, die für den Materialabtrag geeignet sind. Sie sind am vorderen Rand auf der Oberfläche des Kernrohres verteilt befestigt, so dass sie einen Kranz von Abtragselementen bilden, der am vorderen Ende Bohrkrone liegt und die Frontseite der Bohrkrone bedeckt. Alternativ oder ergänzend können auch auf einem schmalen vorderen Ring der Außenmantelfläche, optional auch der Innenmantelfläche, Abtragselemente angeordnet sein.

Die Begriffe "von" und "hinten" bzw. "Front- und "Rückseite" oder dazu analoge Begriffe beziehen sich auf die Richtung des mechanischen Materialabtrags und damit mit der Achse des Bohrkerns und der Bohrkrone zusammenfällt.

Das dem vorderen Ende gegenüberliegende hintere Ende der Bohrkrone ist durch eine Schlussplatte gebildet, welche die Bohrkrone nach hinten abschließt und auf verschiedene Weise ausgebildet sein kann. Sie kann beispielsweise kreisförmig, kreisringförmig oder anders geformt sein, so dass sie die Stabilität der Bohrkrone sowie die Dreh- und Vorwärtsbewegung der Bohrkrone im entstehenden Loch gewährleistet.

An der Schlussplatte oder dem Kernrohr sind geeignete Verbindungsmittel angeordnet, welche geeignet sind zur Herstellung einer mechanischen Verbindung zu einer Versorgungseinheit des Bohrgeräts. Die Verbindung zur Versorgungseinheit ist derart, dass die Bohrkrone drehbar ist. In Abhängigkeit von der Ausführung des Bohrgeräts oder ergänzender Komponenten sind verschiedene Verbindungsmittel geeignet, wie beispielsweise Stutzen, Lager, Flansche oder andere.

Die Bohrkrone weist zudem zumindest zwei, optional auch mehr Hochdruck-Strahldüsen auf. Diese sind über geeignete Verbinder mit einer geeigneten Hochdruckquelle verbunden, welche ein unter Hochdruck, gegebenenfalls auch Höchstdruck, stehendes Strahlmedium bereitstellt und über die Verbinder zur den Hochdruck-Strahldüsen leitet.

Eine Düse ist eine röhrenförmige, ein Fluid lenkende Vorrichtung, welche zur Erhöhung der Geschwindigkeit des Fluids einen zum Düsenausgang hin verjüngenden Querschnitt aufweist. Als Strahldüse wird eine solche Düse bezeichnet, die eine oder mehrere Öffnung hat zur Erzeugung eines Strahls aus einem unter Hoch- oder Höchstdruck stehenden Strahlmediums, so dass der Strahl einem gerichteten Strahlweg folgt.

Als Strahlweg wird hier eine zentrale Achse des Strahl verstanden, welche die vorherrschende Ausbreitungsrichtung des Fluids kennzeichnet und regelmäßig durch die Achse des röhrenförmigen Teils der Düse bestimmt wird. Dem Strahlmedium können in Abhängigkeit vom zu bohrenden Material feste Partikel zugesetzt sein, um die abrasive Wirkung zu verstärken.

Für die Verwendung in der Bohrkrone sind solche Hochdruck-Strahldüsen geeignet, welche die gewünschte Strahlform liefern, beispielsweise gefächert, gebündelt, Mehrfach-Strahlen oder andere, oder die Variation der Strahlform ermöglichen und dem verwendeten Strahlmedium sowie dem verwendeten Druck angepasst sind.

Augenscheinlich sind die Hochdruck-Strahldüsen derart angeordnet, dass keine der Hochdruck-Strahldüsen über den Innenradius der Abtragselemente, hier als Kranzinnenradius bezeichnet, hinausragen, d. h. keinen geringeren Abstand zur Achse des Kernrohres haben als die Abtragsmittel. Andernfalls würden die Hochdruck-Strahldüsen im Verlauf des Bohrens mit dem Bohrkern kollidieren.

Konstruktiv ist das auf verschiedene Art zu realisieren. Die Hochdruck-Strahldüsen können in der Innenmantelfläche des Kernrohres versenkt sein, so dass sie nicht über die Innenmantelfläche hinausragen. Alternativ oder ergänzend kann der der Kranzinnenradius kleiner sein als der Innenradius des Kernrohres, so dass die Strahldüsen um einen Betrag über die Innenmantelfläche des Kernrohres hinausragen können, der kleiner ist als die Differenz zwischen Rohrinnenradius und Kranzinnenradius.

Es ist augenscheinlich, dass auch die Zuführung des Strahlmedium ebenso, wie zu den Strahldüsen beschrieben, nicht über den Kranzinnenradius und analog auch nicht über den Kranzaußenradius hinausragen, um nicht mit der Wandung des Bohrkerns bzw. des Bohrlochs zu kollidieren.

Die Hochdruck-Strahldüsen sind in das Innere des Kernrohres gerichtet, um dort Material am Bohrkern abzutragen, indem er beispielsweise definiert in Abschnitte unterteilt oder zerstört wird oder beide Varianten der Bearbeitung des Bohrkerns miteinander kombiniert werden.

Durch verschiedene Ausrichtungen der Hochdruck-Strahldüsen kann Ort und Umfang des Materialabtrags beeinflusst werden. Entsprechend einer Ausgestaltung kann die Strahlrichtung der Hochdruck-Strahldüsen variierbar sein, um den Materialabtrag an den jeweiligen Anwendungsfall anzupassen.

Hinsichtlich der Anzahl, der Lage und der Ausrichtung der Hochdruck-Strahldüsen kann neben dem Ort und dem Umfang des Materialabtrags auch die Strahlform berücksichtigt werden. Die Variation dieser Parameter gestattet sehr verschiedene Ausführung des Materialabtrags und die Einbeziehung weiterer Bedingungen für das auszuführende Verfahren. Beispielsweise können die Hochdruck-Strahldüsen so ausgerichtet sein, dass der Strahl nur auf die Innenmantelfläche des Kernrohres fällt. Damit ist gewährleistet, dass bei einem Durchbruch des Strahls durch das abzutragende Material eine Beschädigung der dahinter liegenden Kanalwandung ausgeschlossen ist.

Um den Abraum, der infolge des Materialabtrags durch die Hochdruckstrahlen in der Bohrkrone entstehen kann, aus dem Inneren der Bohrkrone zu entfernen, weist die Bohrkrone Abflüsse auf, wobei diese mit den Zuführungen des Strahlmediums am oder im Kernrohr koordiniert werden. Die Abflüsse sind entsprechend der Menge und der Viskosität des Abraums, einer Mischung aus abgetragenem Material und Strahlmedium, gestaltet und angeordnet. Beispielsweise ist ein Durchgang oder mehrere davon in der Schlussplatte ausgebildet. Ergänzend können Durchbrüche auch im Kernrohr angeordnet sein

Eine Ableitung des Abraums kann, sofern erforderlich, durch kanalartige Vertiefungen in der Außenmantelfläche des Kernrohrs unterstützt werden. In diesen Vertiefungen wird eine Ableitung des Abraums außenhalb der Bohrkrone unterstützt. Optional können Durchbrüche im Kernrohr in diesen Vertiefungen münden und/oder die Vertiefungen spiralförmig verlaufen.

In vergleichbarer Weise können die Zuführungen zu den Hochdruck-Strahldüsen, in welchen das Strahlmedium zu den Hochdruck-Strahldüsen geleitet wird, als Kanäle in der Wandung des Kernrohres ausgebildet sein. Eine solche, in einem massiven Bauteil ausgebildete Leitungsführung hat, insbesondere bei unter Hochdruck stehendem Strahlmedium, den Vorteil, dass steife und störanfällige Zuführungen vermieden werden können. Mittels Drehdurchführungen kann die Weiterleitung aus einer statischen, sich nicht drehenden Zuführung in ein Zuführung in einem drehbaren Teil zuverlässig realisiert werden. Gleiches trifft auch auf die Ausführungsvariante zu, in welcher die Zuführungen durch oder in die Schlussplatte zu dort angeordneten Hochdruck-Strahldüsen geführt werden. Hinsichtlich solcher in der Wandung von Bauteilen ausgeführter Zuführungen und erforderlicher Drehdurchführungen wird auf die EP 3 305 425 A1 verwiesen, in welcher verschiedenartige Ausführungen dazu beschrieben sind.

Die Zuführungen des Strahlmediums können alternativ auch außerhalb der Wandung ausgeführt sein. Sofern es die Differenzen zwischen Kranzinnen- bzw. Kranzaußenradius und Kernrohrinnen- bzw. Kernrohraußenradius gestatten, beim Bohren einen ausreichenden Abstand zwischen der Wandung des Bohrkerns bzw. des Bohrlochs und der Innen- bzw. der Außenwandung des Kernrohres herzustellen, können Zuführungen des Strahlmediums zu den Strahldüsen beispielsweise auf der Wandung des Kernrohres angeordnet sein.

Zur Ausführung des Verfahrens einer Kernbohrung wird die Bohrkrone mittels eines Antriebs, üblicherweise dem Antrieb der externen Versorgungseinheit, in Drehbewegung um die Achse der Bohrkrone versetzt und eine Vorwärtsbewegung ausgeführt. Infolge dessen erfolgt ein kreisringförmiger Materialabtrag, welcher mit dem Kranz der Abtragsmittel am vorderen Ende der Bohrkrone korrespondiert. Mit voranschreitender Vorwärtsbewegung und andauernder Drehbewegung bildet sich ein zylinderförmiger Bohrkern aus, der zunehmend in das Kernrohr ragt.

Gleichzeitig oder ab einer gewünschten Länge des Bohrkerns können mittels der Hochdruck-Strahldüsen der Bohrkrone Strahlen des unter Hochdruck stehenden Strahlmediums erzeugt und in den Innenraum und damit auf den Bohrkern gerichtet werden. Infolge dessen erfolgt ab dem Zeitpunkt, zu dem die abrasiven Strahlen auf den Bohrkern treffen ein Materialabtrag am Bohrkern. Das aus dem Bohrkern gelöste Material mischt sich mit dem Strahlmedium und wird mittels der oben beschriebenen Abflüsse aus dem Bohrkern in den bestehenden Kanal befördert.

Mittels Art, Anzahl, Lage und Ausrichtung der Hochdruck-Strahldüsen kann der Materialabtrag im gewünschten Umfang und gewünschter Form erzielt werden.

Durch die Art der Strahldüsen kann beispielsweise die Bündelung des Strahls und damit die Intensität und der Umfang, d. h. Tiefe und Fläche, des durch einen Strahl erzeugten Abtrags variiert werden. Gleiches ist auch durch die Anzahl und die Lage der Hochdruck-Strahldüsen zu erzielen. So kann der Abtrag durch eine gleichmäßige Einwirkung der Strahlen mehrerer verteilter Hochdruck-Strahldüsen auf einer größeren Oberfläche erfolgen oder an ausgewählten Stellen.

Beispielsweise können eine oder mehrere Hochdruck-Strahldüsen auf der Innenmantelfläche des Kernrohres hinter den Abtragselementen angeordnet sein. Wenn dabei deren Strahlen auf die Achse des Bohrkerns gerichtet sind, indem die Strahlrichtungen einen bzw. den gleichen Winkel β im Bereich von - 45° bis + 45°zur Normalen der Innenmantelfläche am Düsenaustritt aufweisen, so kann ein umlaufender Spalt in den Bohrkern eingebracht werden, der bis zur Bohrkernmitte und damit bis zur Abtrennung eines Teils des Bohrkerns geführt werden kann. Zu diesem Zweck wird nach Erreichen der gewünschten Länge des Bohrkerns der Bohrvorgang beendet oder zumindest der Vortrieb der Bohrkrone und mittels der Strahldüsen und dem unter Hoch- oder Höchstdruck stehenden Strahlmedium ein Schnitt in den Bohrkern eingebracht. Bei der Alternative der weiter drehenden Bohrkrone, ohne Vortrieb, kann umfänglich ein gleichmäßigeres Schneidergebnis erzielt werden als bei stehender Bohrkrone. Zudem sind infolge der Drehung der, in Richtung Bohrlochtiefe unbewegten, Strahldüsen weniger davon erforderlich.

In einer solchen Verfahrensvariante, aber ebenso bei Entstehung eines weit in die Bohrkrone ragenden Bohrkerns, kann es von Vorteil sein, den Bohrkern während der Materialabtrags zu stabilisieren und/oder nach der Abtrennung eines Abschnitts zu fixieren. Zu diesem Zweck kann das Kernrohr Haltemittel aufweisen, die den Bohrkern halten. Diese können von der Schlussplatte oder vom Kernrohr ausgehend den Bohrkern halten. Beispielsweise kann an der Innenmantelfläche Federn oder ein Presskissen oder mehrere davon angeordnet werden. Letztere dehnen sich durch das Füllen mit einem Fluid, dem Strahlmedium oder einem anderen Fluid, in Richtung zum Bohrkern aus und pressen sich an den Bohrkern. Das anliegende Strahlmedium gestattet beispielsweise ein Presskissen oder mehrere davon zu füllen. Alternativ kann auch ein anderes Medium, beispielsweise Druckluft, für eine solches Presskissen verwendet werden. Mittels Anpressdruck und Anpressfläche kann die aufzubringende Haltekraft variiert werden. In einer weiteren Ausgestaltung können mittels eines Kranzes von Hochdruck-Strahldüsen oder einzelner davon verschieden anzuordnende Nuten in den Bohrkern eingebracht werden, in welche die Haltemittel eingreifen können.

Alternativ oder ergänzend können auch Hochdruck-Strahldüsen großflächig und mit solcher Abtragsleistung auf den hinteren Teil des Bohrkerns, d. h seinem freien Ende gerichtet werden, so dass dieser fortlaufend abgetragen wird. Ein solcher Abtragsfortschritt kann mit dem Vortrieb der Bohrkrone entsprechend dem mechanischen Abtrag korrespondieren.

Weitere Gestaltungen sind möglich, beispielsweise verschiedene Kombinationen des Betriebs der Strahldüsen mit einer Drehbewegung und/oder Vorwärtsbewegungen sind möglich. Beispielsweise kann der Materialabtrag auch bei einem Stillstand der Drehbewegung und damit eines Stillstands des mechanischen Abtrags erfolgen.

In einer weiteren Ausgestaltung des Verfahrens kann der mechanische Materialabtrag am vorderen Ende des Kernrohres durch einen Abtrag mittels Strahlmedium ergänzt werden. Zu diesem Zweck kann zumindest eine Hochdruck-Strahldüse an der Frontseite des Kernrohres angeordnet und in Bohrrichtung ausgerichtet ist. Dabei kann die Ausrichtung von der Bohrrichtung auch um einige Grad abweichen, so dass ein breiterer ringförmiger Spalt und schmalerer Bohrkern entsteht. Auch hier hängen Intensität und Breite des Abtrags mittels Strahlmedium vom Anwendungsfall ab.

Die Kombination des mechanischen Abtrags mit der Verwendung von Strahldüsen ermöglicht es, dass die Strahldüsen mit dem Strahlmedium, alternativ auch einem anderen Spülmedium mit verringerten Druck von maximal wenigen 10 bar, zum Kühlen und/oder Spülen genutzt werden können.

Das beschriebene Verfahren kann Erdbohrungen in der Geologie, Geothermie, Bauwesen oder anderen Anwendungen verwendet werden, wo sowohl vertikale als auch horizontale Bohrlöcher benötigt werden. Eine Anwendung ist beispielsweise die Öffnung von vollständigen oder teilweisen Verschlüssen von geschlossenen Kanälen, die infolge von Anhaftungen an deren Innenfläche entstanden sind. Anstelle mit Kanalfräsen das den Kanal zusetzende Material vollständig abzutragen, werden mittels der beschriebenen Bohrkrone nur Ringlöcher mit einem Außendurchmesser, der gleich oder nur geringfügig kleiner dem Innendurchmesser des Kanals ist, eingebracht und der verbleibende Bohrkern entnommen. Damit reduziert sich der Aufwand für eine solche Kanalöffnung auf einen Bruchteil.

Die Bohrkrone wird zu diesem Zweck mit einer Kanalreinigungsvorrichtung betrieben, mittels welcher der Vortrieb und die Drehbewegung der Bohrkrone ausgeführt und das unter Hochdruck stehende Strahlmedium zugeführt wird.

Eine solche Vorrichtung umfasst an seinem vorderen Ende die zuvor beschriebene Bohrkrone, ein geeignetes Bewegungsmittel zum Bewegen und Positionieren der Bohrkrone im Kanal sowie eine Medienzufuhr zur Versorgung der Hochdruck-Strahldüsen mit dem unter Hochdruck stehenden Strahlmedium. Als Bewegungsmittel sind verschiedene Ausführungen geeignet, beispielsweise hand- oder maschinenbetriebene Vorschubstangen oder Zugmittel. Auch ferngesteuerte Fahrwagen oder andere Ausführungen sind verwendbar. Es ist augenscheinlich, dass die Bewegungsmittel sowie die Bohrkrone derart ausgebildet sind, dass beide zumindest entlang einer Seite mit einem Abstand zur Wandung des Kanals positionierbar und bewegbar sind.

Verfahren und Vorrichtungen sollen nachfolgend an Ausführungsbeispielen beispielhaft, jedoch nicht beschränkend näher erläutert werden. Die zugehörigen Zeichnungen zeigen in
Fig. 1 eine Bohrkrone mit einem Bohrgerät in Schnittdarstellung, am Beispiel einer Kanalreinigungsvorrichtung,
Fig. 2 eine Detaildarstellung der Abtragselemente der Bohrkrone,
Fig. 3 die Vorderansicht der Bohrkrone gemäß Fig. 1 und
Fig. 4 eine alternative Ausgestaltung einer Bohrkrone.

Die nachfolgenden Figuren zeigen die Vorrichtungen zum besseren Verständnis lediglich schematisch und erheben keinen Anspruch auf Vollständigkeit und Maßstäblichkeit.

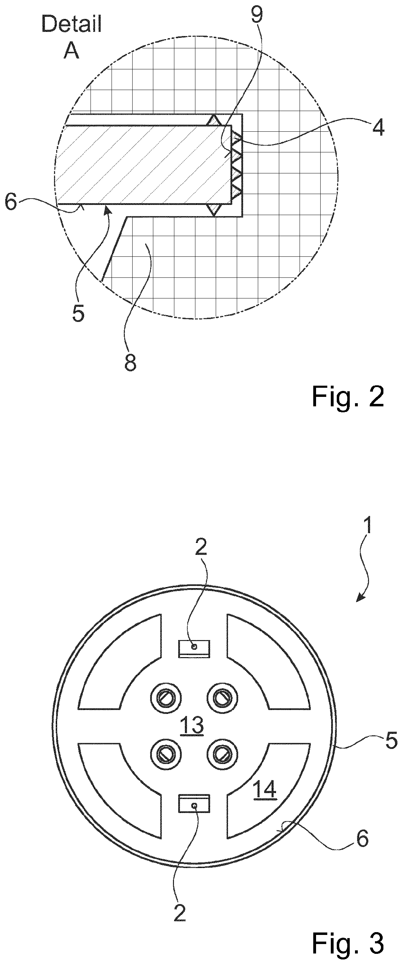

Die Bohrkrone 1 weist ein hohlzylinderförmiges Kernrohr 5 mit einer Achse 5 auf. Am vorderen Ende 16 des Kernrohrs 5 sind auf der Frontseite 9 (Fig. 2) Abtragselemente 4 befestigt, so dass auf der Frontseite 9 eine kranzförmige Anordnung der Abtragselemente 4 ausgebildet ist. Am hinteren Ende des Kernrohres 5 ist eine Schlussplatte 13 angeordnet.

Die Schlussplatte 13 weist auf seiner dem Kernrohr 5 abgewandten Oberfläche eine mittige Aussparung 15 auf, welche als Verbindungsmittel zur Herstellung einer mechanischen Verbindung zum hinter der Bohrkrone 10 angeordneten Versorgungseinheit 20 des Bohrgeräts dient. Die Versorgungseinheit 20 dient der Bewegung der Bohrkrone 1, deren Versorgung mit dem Strahlmedium 3, der Versorgung des Antriebs 21 mit Energie sowie dessen Steuerung.

Eine Welle 12 mündet in der Aussparung 15 der Bohrkrone und ist mit einem Flansch 22 an der Schlussplatte 13 montiert. Die Welle 12 überträgt die Drehbewegung eines Antriebs 21 der Versorgungseinheit 20 auf die Schlussplatte 13 der Bohrkrone 1. Der Antrieb 21 kann verschiedene Antriebsmittel nutzen, beispielsweise elektrische, hydraulische oder andere.

Die Schlussplatte 13 weist weiterhin zwei Hochdruck-Strahldüsen 2 auf, deren Strahlrichtungen (als gestrichelte Linie dargestellt) mit einem flachen Winkel, gemessen zur Oberfläche der Schlussplatte 13, auf die Innenmantelfläche 6 des Kernrohrs 5 gerichtet sind. Die Strahldüsen 2 sind in die Oberfläche der Schlussplatte 13 versenkt, um eine ungehinderte Strahlausbreitung auch bei einem solchen flachen Winkel zu gewährleisten.

Die Strahldüsen 2 stehen in Verbindung mit einer Hochdruckquelle 30 eines Strahlmediums 3. Die Zuführungen 11 von der Hochdruckquelle 30 zu den Strahldüsen 2 verlaufen in Kanälen oder Leitungen durch die Versorgungseinheit 20, durch deren Welle 12 über eine zentralen den Verteiler 19 in der Schlussplatte 13 bis zu den Hochdruck-Strahldüsen 2. Andere Ausführungen der Zuführungen 11 und der Verbindung zur Hochdruckquelle 30 sind möglich.

Fig. 3 stellt die Ansicht in die Bohrkrone 1 dar. Die beiden Strahldüsen 2 sind radial und einander gegenüber liegend in der Schlussplatte 13 angeordnet. Die Schlussplatte weist vier gleichmäßig verteilte Kreisringsegmente auf, welche Abflüsse 14 für den in der Bohrkrone entstehenden Abraum (nicht dargestellt) bilden. Die Abflüsse 14 sind als durch die Schlussplatte 13 verlaufende Durchbrüche ausgebildet.

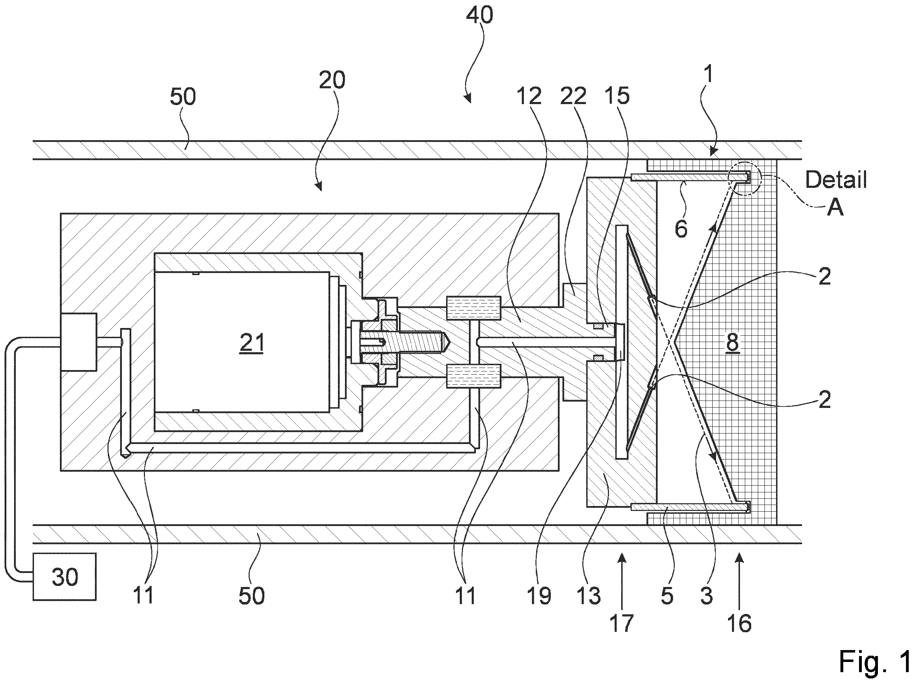

Die Vorrichtung gemäß Fig. 1 kann beispielsweise eine Vorrichtung zur Beseitigung von Anhaftungen an der Innenfläche von Kanälen, insbesondere von geschlossenen Kanälen sein. In diesem Fall kann die Versorgungseinheit 20 geeignete Bewegungsmittel (nicht dargestellt) aufweisen, wie Räder, Ketten, Kufen oder andere. Sofern die Bohrkrone 1, wie in Fig. 1 dargestellt, in zumindest einer Ausdehnung größer ist als die Versorgungseinheit 20, können geeignete Maßnahmen ergriffen werden, um die Bohrkrone 1 im Kanal zu zentrieren. Es können geeignete Abstandshalter verwendet werden oder die Bewegungsmittel um die Vorrichtung derart angeordnet werden, dass eine Zentrierung mit den Bewegungsmitteln erfolgen kann.

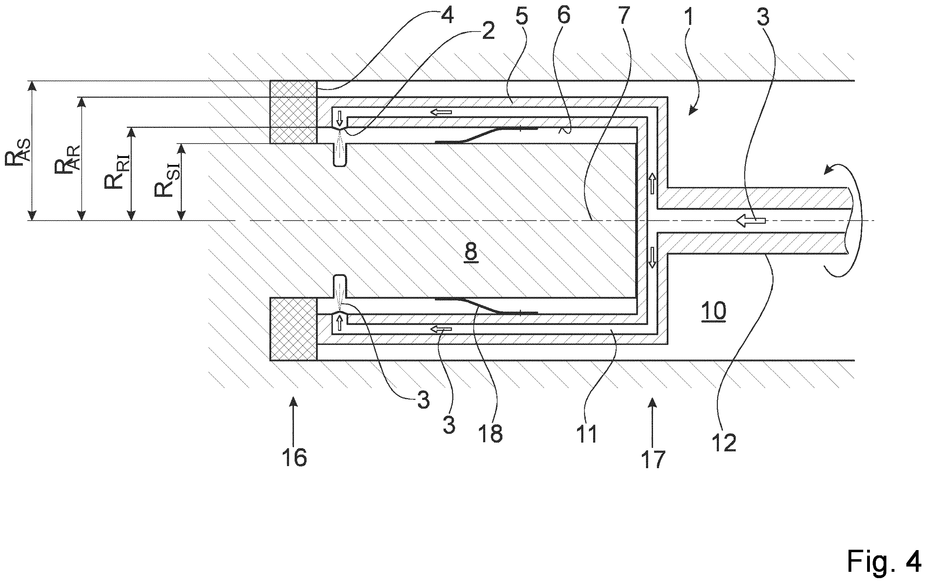

Fig. 4 stellt eine alternative Ausgestaltung einer Bohrkrone dar. Die Bohrkrone weist mehrere Strahldüsen 2 für das Strahlmedium 3 auf, die vom vorderen Ende der Bohrkrone aus betrachtet hinter den Abtragselementen 4 (schematisch als Block dargestellt) und auf einem Umfang der Innenmantelfläche 6 des Kernrohres 5 verteilt angeordnet sind. Die Anordnung der Strahldüsen 2 soll nachfolgend auch als Düsenkranz bezeichnet sein. Deren Strahlrichtung verläuft in den Hohlzylinder des Kernrohres 5. Die Strahlrichtung der Strahldüsen 2 kann senkrecht zur Oberfläche der Innenmantelfläche 6 in Richtung zu Achse 7 des Kernrohres 5 ausgerichtet sein. Alternativ kann sie auch um einen Winkel von bis +/- 45° von der Richtung abweichen, d. h. mehr zum vorderen Ende 16 oder hinteren Ende 17 verlaufen. Größere Abweichungen davon sind möglich, sofern der Anwendungsfall dies geeignet erscheinen lässt. Die Winkelausrichtung der Strahlrichtung kann mittels der Strahldüsen 2 variierbar sein.

Die Strahldüsen 2 sind derart angeordnet, dass keine der Strahldüsen 2 über den Innenradius der Abtragselemente 4 hinausragen, d. h. einen geringeren Abstand zur Achse 7 des Kernrohres hat als die Abtragselemente. Andernfalls würden die Strahldüsen 2 im Verlauf des Bohrens mit dem Bohrkern 8 kollidieren. Konstruktiv ist das auf verschiedene Art zu realisieren. Die Strahldüsen 2 können in der Innenmantelfläche 6 des Kernrohres 5 versenkt sein, so dass sie nicht über die Innenmantelfläche 6 hinausragen. Alternativ oder ergänzend kann der der Innendurchmesser des Kranzes der Abtragselemente 4 (Schneidinnendurchmesser, entsprechend Schneidinnenradius R_{SI}) kleiner sein als der Innendurchmesser des Kernrohres 5 (Kernrohrinnendurchmesser, entsprechend Kernrohrinnenradius R_{RI}), so dass die Strahldüsen 2 um einen Betrag über die Innenmantelfläche 6 des Kernrohres 5 hinausragen können, der kleiner ist als die Differenz zwischen Rohrinnenradius und Schneidinnenradius R_{SI}.

Die umfänglich verteilten Hochdruckstrahlen eines abrasiv wirkenden Strahlmediums 3, die zur der Achse 7 der Bohrkrone 1 gerichtet sind, gestatten es, den Bohrkern 8 auf eine gewünschte Länge, maximal die Innere freie Länge der Bohrkrone 1, abzuschneiden.

Der Abstand eines Düsenkranzes zum vorderen Ende 16 der Bohrkrone 1 definiert dabei die maximale Schnittlänge des Bohrkerns 8. Im dargestellten Ausführungsbeispiel ist der Düsenkranz am vorderen Ende des Kernrohres 5, so nah wie möglich hinter den Abtragselementen 4, angeordnet. Ein größerer Abstand zum vorderen Ende 16 oder mehrere Düsenkränze sind alternativ möglich.

Am Kernrohr 5 und mit Wirkrichtung in das Kernrohr 5 und damit zum Bohrkern 8 sind Haltemittel 18, beispielsweise Blattfedern, angeordnet, die geeignet sind, den Bohrkern 8 mit solcher Kraft halten und/oder zu fixieren, dass der Bohrkern 8 mit der Bohrkrone 1 aus dem Bohrloch 10 entfernt werden kann. Augenscheinlich sind die dafür aufzubringende Kraft und dementsprechend die geeigneten Haltemittel 18 von Größe, Gewicht und Stabilität des Bohrkerns 8 abhängig. Die Bohrkrone 1 weist eine Welle 12 auf, mit welcher sie mit einem geeigneten Bohrgerät (nicht dargestellt) mechanisch verbunden werden kann. Die Zuführung 11 des Strahlmediums zu den Hochdruck-Strahldüsen 2 verläuft in Kanälen durch die Welle 12 und die Wandung des Kernrohrs 5. Die Bohrkrone 5 weist zudem Abflüsse (nicht dargestellt) zur Ableitung des Abraums aus, wie in der allgemeinen Beschreibung dargelegt.

Zur Verdeutlichung der funktionellen Zusammenhänge der Komponenten der Bohrkrone und des Bohrgeräts soll das Verfahren am Beispiel einer Bearbeitung von Kanalwandungen anhand der Vorrichtung gemäß Fig. 1 beispielhaft erläutert werden. Mit der oben beschriebenen Vorrichtung können Bearbeitungen von geschlossenen Kanälen mit den folgenden grundlegenden Schritten ausgeführt werden:
- Bewegen des Bohrgeräts im Kanal 50 bis zu einem zu beseitigenden Hindernis oder einer zu beseitigenden Anhaftung.
- Aktivierung des Antriebs 21 und Erzeugung einer Rotation der Bohrkrone 1 bei fortgesetzter Vorwärtsbewegung des Bohrgeräts 40 im Kanal 50, jedoch mit wesentlich verlangsamter Geschwindigkeit und
- Erzeugen von zwei gerichteten, gebündelten Hochdruckstrahlen mittels der beiden Strahldüsen 2 durch Zufuhr des flüssigen unter Hochdruck stehenden Strahlmediums 3 zu den Strahldüsen 2.
- Schneiden eines Bohrkernes 8 mittels der Abtragselemente 4 am vorderen Ende 16 der Bohrkrone 1 und
- Abtrag des Bohrkernes 8 in der Bohrkrone 1 mittels der Hochdruckstrahlen bis die Anhaftung durchbrochen ist.
- Während des Schneidens und Abtragens wird der Abraum durch die Schlussplatte 13 hinter die Bohrkrone und in den offenen Bereich des Kanals 50 abgeleitet.

Die Steuerung der Rotation der Bohrkrone und des Vortriebs des Bohrgeräts sowie die Steuerung des Strahlmediums kann mittels einer geeigneten Steuereinheit erfolgen. (nicht dargestellt). Zur Kontrolle des Abtrags und Steuerung des Verfahrens kann zudem die Umgebung der Vorrichtung mittels einer Kamera erfasst werden.

Entsprechend verschiedener alternativer Ausgestaltungen der Vorrichtung sind verschiedene Variationen des Verfahrens möglich.

## Patentansprüche

1. Verfahren zur Ausführung von Kernbohrungen in einem Material mittels Bohrgeräten, welche eine Bohrkrone (1) verwenden, die mit einem hohlzylindrischen Grundkörper, nachfolgend als Kernrohr (5) bezeichnet, ausgebildet ist und am vorderen, dem Materialabtrag dienenden Ende (16) des Kernrohrs (5) Abtragselemente (4) aufweist, welche auf der Oberfläche des Kernrohres (5) kranzförmig verteilt befestigt sind, folgende Verfahrensschritte umfassend:
- Ausführen einer Vorwärtsbewegung der Bohrkrone (1) kombiniert mit einer Drehbewegung der Bohrkrone (1) um seine Achse (7) mittels eines Antriebs (21) zum kreisringförmigen Abtrag am Material und Ausbildung eines Bohrkerns (8) des Materials im Kernrohr (5),
- Bereitstellung eines unter Hochdruck stehenden Strahlmediums (3) an der Bohrkrone (1), **gekennzeichnet durch**:
- Erzeugung von zumindest zwei in den Innenraum der Bohrkrone (1) gerichteten Strahlen des Strahlmediums (3) mittels Hochdruck-Strahldüsen (2) und
- Materialabtrag am Bohrkern (8) mittels des Strahlmediums (3), wobei ein Abtrag des Bohrkerns (8) an seinem freien Ende mittels des Strahlmediums (3) erfolgt.

2. Verfahren nach Anspruch 1, wobei der Abtrag des Bohrkerns (8) an seinem freien Ende im Inneren des Kernrohres (5) erfolgt.

3. Verfahren nach Anspruch 2, wobei Abraum, der infolge des Materialabtrags durch die Hochdruckstrahlen in der Bohrkrone entsteht, aus dem Inneren der Bohrkrone mittels Abflüsse entfernt wird, welche die Bohrkrone aufweist.

4. Verfahren nach einem der vorstehenden Ansprüche, wobei ein Abschnitt des Bohrkerns (8) mittels Hochdruckstrahlen des Strahlmediums (3), welche auf die Achse (7) der Bohrkrone (1) gerichtet sind, abgetrennt wird.

5. Verfahren nach einem der vorstehenden Ansprüche, wobei zumindest eine weitere Hochdruck-Strahldüse (2), welche auf der Frontseite (9) des Kernrohrs (5) angeordnet ist, in Bohrrichtung strahlt.

6. Verfahren nach einem der vorstehenden Ansprüche, wobei das Verfahren in Verbindung mit einer Kanalreinigungsvorrichtung zur Beseitigung von Anhaftungen (51) an der Innenfläche von geschlossenen Kanälen (50) mittels Hochdruckstrahlen verwendet wird.

7. Bohrkrone, ausgebildet zur Ausführung des Verfahrens nach einem der vorstehenden Ansprüche, welche folgende Bestandteile umfasst:
- einen hohlzylindrischen Grundkörper, nachfolgend als Kernrohr (5) bezeichnet, mit einer Achse (7) und einem vorderen Ende (16) und einem dem vorderen Ende (16) gegenüber liegenden hinteren Ende (17),
- wobei das Kernrohr (5) Abtragselemente (4) aufweist, welche am vorderen Ende (16) auf der Oberfläche des Kernrohres (5) kranzförmig verteilt befestigt sind,
- Verbindungsmittel zur Herstellung einer mechanischen Verbindung zu einer externen Versorgungseinheit eines Bohrgeräts (40) derart, dass die Bohrkrone (1) drehbar ist,
**gekennzeichnet durch**:
- eine Schlussplatte (13) am hinteren Ende (17) des Kernrohrs (5),
- zumindest zwei Hochdruck-Strahldüsen (2), welche verbindbar sind mit einer externen Hochdruckquelle (30) eines Strahlmediums (3),
- wobei die Hochdruck-Strahldüsen (2) auf der Innenmantelfläche (6) des Kernrohres (5) und/oder der dem vorderen Ende (16) zugewandten Oberfläche der Schlussplatte (13) angeordnet und in das Innere des Kernrohres (5) gerichtet sind, und
- wobei die Bohrkrone (1) zumindest einen Abfluss (14) aufweist zum Ableiten von Abraum aus dem Innenraum des Kernrohrs (5) und der zumindest eine Abfluss (14) ein Durchgang ist, welcher in der Schlussplatte (13) ausgebildet ist.

8. Bohrkrone nach Anspruch 7, wobei die Strahldüsen (2) derart in das Innere der Bohrkrone (1) ausgerichtet sind, dass der Strahl auf die Innenmantelfläche (6) des Kernrohres (5) oder die Schlussplatte (13) fällt.

9. Bohrkrone nach einem der Ansprüche 7 oder 8, wobei die Strahlrichtung der Hochdruck-Strahldüsen (2) variierbar ist.

10. Bohrkrone nach einem der Ansprüche 7 bis 9, wobei zumindest eine Hochdruck-Strahldüse (2) auf der Innenmantelfläche (6) des Kernrohres (5) hinter den Abtragselementen (4) angeordnet ist, wobei die Strahlrichtung der Hochdruck-Strahldüse (2) einen Winkel β zur Normalen der Innenmantelfläche (6) am Düsenaustritt im Bereich von - 45° bis + 45° hat, bezogen auf die Normale.

11. Bohrkrone nach einem der Ansprüche 7 bis 10, wobei die Außenmantelfläche des Kernrohrs (5) kanalartige Vertiefungen aufweist, welche zum hinteren Ende (17) hin verlaufen.

12. Bohrkrone nach einem der Ansprüche 7 bis 11, wobei die Zuführungen (11) zu den Hochdruck-Strahldüsen (2) in der Wandung des Kernrohrs (5) und/oder in der Schlussplatte (13) ausgebildet sind.

13. Bohrkrone nach einem der Ansprüche 7 bis 12, wobei das Kernrohr (5) Haltemittel (18) zum Halten eines Bohrkerns (8) im Kernrohr (5) aufweist.

14. Bohrkrone nach einem der Ansprüche 7 bis 13 das zumindest eine Hochdruck-Strahldüse (2) an der Frontseite (9) des Kernrohres (5) angeordnet und in Bohrrichtung ausgerichtet ist.

15. Vorrichtung zur Beseitigung von Anhaftungen an der Innenfläche von Kanälen (50) mittels Hochdruckstrahlen, folgende Komponenten umfassend:
- eine Bohrkrone (1) nach einem der Ansprüche 7 bis 14, welche am vorderen Ende (16) der Vorrichtung angeordnet ist,
- Bewegungsmittel zum Bewegen und Positionieren der Bohrkrone (1) im Kanal (50),
- eine Medienzufuhr, zur Versorgung der Hochdruck-Strahldüsen (2) mit dem unter Hochdruck stehenden Strahlmedium (3),
- wobei die Bewegungsmittel sowie die Bohrkrone (1) derart ausgebildet sind, dass beide zumindest entlang einer Seite mit einem Abstand zu einer Kanalwandung (50) positionierbar und bewegbar sind.

## Claims

1. Method for carrying out core drilling in a material by means of drilling apparatuses that use a drill bit (1), which drill bit (1) is configured with a hollow cylindrical main body, designated below as core barrel (5), and has, at the front end (16) of the core barrel (5) serving for the abrasion of material, abrasion elements (4) which are secured on the surface of the core barrel (5) and distributed on said surface in a ring shape, said method comprising the following method steps:
- executing a forward movement of the drill bit (1) in combination with a rotational movement of the drill bit (1) about its axis (7) by means of a drive (21), for annular abrasion at the material and formation of a drilling core (8) of the material in the core barrel (5),
- making available a high-pressure blasting medium (3) at the drill bit (1), **characterized by**:
- generating at least two jets of the blasting medium (3) directed into the interior of the drill bit (1) by means of high-pressure jet nozzles (2), and
- abrading material at the drilling core (8) by means of the blasting medium (3), wherein abrading of the drilling core (8) takes place at its free end by means of the blasting medium (3).

2. Method according to Claim 1, wherein the abrading of the drilling core (8) at its free end takes place in the interior of the core barrel (5).

3. Method according to Claim 2, wherein excavated matter, resulting from the abrading of material by the high-pressure jets in the drill bit, is removed from the interior of the drill bit by way of outflows that the drill bit has.

4. Method according to one of the preceding claims, wherein a portion of the drilling core (8) is cut off by means of high-pressure jets of the blasting medium (3) that are directed to the axis (7) of the drill bit (1).

5. Method according to one of the preceding claims, wherein at least one further high-pressure jet nozzle (2), which is arranged on the front face (9) of the core barrel (5), blasts in the drilling direction.

6. Method according to one of the preceding claims, wherein the method is used in conjunction with a channel-cleaning device for eliminating adherences (51) at the inner face of closed channels (50) by means of high-pressure blasting.

7. Drill bit, configured to carry out the method according to one of the preceding claims, said drill bit comprising the following constituent parts:
- a hollow cylindrical main body, designated below as core barrel (5), with an axis (7) and a front end (16) and a rear end (17) lying opposite the front end (16),
- wherein the core barrel (5) has abrasion elements (4) which, at the front end (16), are secured on the surface of the core barrel (5) and distributed on said surface in a ring shape,
- connection means for producing a mechanical connection to an external supply unit of a drilling apparatus (40) in such a way that the drill bit (1) is rotatable,
**characterized by**
- a closure plate (13) at the rear end (17) of the core barrel (5),
- at least two high-pressure jet nozzles (2), which are connectable to an external high-pressure source (30) of a blasting medium (3),
- wherein the high-pressure jet nozzles (2) are arranged on the inner lateral face (6) of the core barrel (5) and/or on that surface of the closure plate (13) facing the front end (16) and are directed into the interior of the core barrel (5), and
- wherein the drill bit (1) has at least one outflow (14) for discharging excavated matter from the interior of the core barrel (5), and the at least one outflow (14) is a passage formed in the closure plate (13).

8. Drill bit according to Claim 7, wherein the jet nozzles (2) are oriented into the interior of the drill bit (1) in such a way that the jet impacts the inner lateral face (6) of the core barrel (5) or the closure plate (13).

9. Drill bit according to either of Claims 7 and 8, wherein the blasting direction of the high-pressure jet nozzles (2) is variable.

10. Drill bit according to one of Claims 7 to 9, wherein at least one high-pressure jet nozzle (2) is arranged on the inner lateral face (6) of the core barrel (5) behind the abrasion elements (4), wherein the blasting direction of the high-pressure jet nozzle (2) has an angle β to the normal of the inner lateral face (6) at the nozzle outlet in the range of -45° to +45°, with respect to the normal.

11. Drill bit according to one of Claims 7 to 10, wherein the outer lateral face of the core barrel (5) has channel-like depressions, which run towards the rear end (17) .

12. Drill bit according to one of Claims 7 to 11, wherein the inlets (11) to the high-pressure jet nozzles (2) are formed in the wall of the core barrel (5) and/or in the closure plate (13).

13. Drill bit according to one of Claims 7 to 12, wherein the core barrel (5) has holding means (18) for holding a drilling core (8) in the core barrel (5).

14. Drill bit according to one of Claims 7 to 13, the at least one high-pressure jet nozzle (2) being arranged at the front face (9) of the core barrel (5) and being oriented in the drilling direction.

15. Device for eliminating adherences at the inner face of channels (50) by means of high-pressure blasting, said device comprising the following components:
- a drill bit (1) according to one of Claims 7 to 14, which drill bit (1) is arranged at the front end (16) of the device,
- moving means for moving and positioning the drill bit (1) in the channel (50), and
- a medium inlet for supplying the high-pressure jet nozzles (2) with the high-pressure blasting medium (3),
- wherein the moving means and the drill bit (1) are configured in such a way that both can be positioned and moved, at least along one side, at a distance from a channel wall (50).

## Revendications

1. Procédé pour effectuer des carottages dans un matériau au moyen d'appareils de forage, qui utilisent une couronne de forage (1) qui est réalisée avec un corps de base cylindrique creux, ci-dessous désigné par tube carottier (5) et qui présente, à l'extrémité avant (16), servant à l'enlèvement de matériau, du tube carottier (5), des éléments d'enlèvement (4) qui sont fixés de manière répartie en forme de couronne sur la surface du tube carottier (5), le procédé comprenant les étapes de procédé suivantes :
- réalisation d'un mouvement d'avance de la couronne de forage (1) combiné à un mouvement de rotation de la couronne de forage (1) autour de son axe (7) au moyen d'un entraînement (21) pour l'enlèvement en forme d'anneau circulaire de matériau et réalisation d'une carotte (8) de matériau dans le tube carottier (5),
- fourniture d'un milieu de projection (3) à haute pression au niveau de la couronne de forage (1),
**caractérisé par** les étapes suivantes :
- production d'au moins deux jets de milieu de projection (3) dirigés dans l'espace interne de la couronne de forage (1), au moyen de tuyères de projection à haute pression (2) et
- enlèvement de matériau au niveau de la carotte (8) au moyen du milieu de projection (3), un enlèvement de la carotte (8) s'effectuant au niveau de son extrémité libre au moyen du milieu de projection (3).

2. Procédé selon la revendication 1, dans lequel l'enlèvement de la carotte (8) s'effectue au niveau de son extrémité libre à l'intérieur du tube carottier (5).

3. Procédé selon la revendication 2, dans lequel les déblais qui se produisent suite à l'enlèvement de matériau par les jets à haute pression dans la couronne de forage sont enlevés de l'intérieur de la couronne de forage par des évacuations disposées au niveau de la couronne de forage.

4. Procédé selon l'une quelconque des revendications précédentes, dans lequel une portion de la carotte (8) est enlevée au moyen de jets à haute pression du milieu de projection (3), lesquels sont orientés sur l'axe (7) de la couronne de forage (1) .

5. Procédé selon l'une quelconque des revendications précédentes, dans lequel au moins une tuyère de projection à haute pression supplémentaire (2) qui est disposée au niveau du côté avant (9) du tube carottier (5) projette dans la direction de forage.

6. Procédé selon l'une quelconque des revendications précédentes, le procédé étant utilisé en association avec un dispositif de nettoyage de conduits pour éliminer les matières (51) adhérant à la surface intérieure de conduits fermés (50) au moyen de jets à haute pression.

7. Couronne de forage, réalisée pour mettre en œuvre le procédé selon l'une quelconque des revendications précédentes, comprenant les constituants suivants :
- un corps de base cylindrique creux, ci-après appelé tube carottier (5), avec un axe (7) et une extrémité avant (16) et une extrémité arrière (17) opposée à l'extrémité avant (16),
- le tube carottier (5) présentant des éléments d'enlèvement (4) qui sont fixés de manière répartie sous forme de couronne à l'extrémité avant (16) sur la surface du tube carottier (5),
- des moyens de connexion pour établir une connexion mécanique avec une unité d'alimentation externe d'un appareil de forage (40), de telle sorte que la couronne de forage (1) puisse tourner,
**caractérisée par** :
- une plaque de fermeture (13) à l'extrémité arrière (17) du tube carottier (5),
- au moins deux tuyères de projection à haute pression (2) qui peuvent être connectées à une source haute pression extérieure (30) d'un milieu de projection (3),
- les tuyères de projection à haute pression (2) étant disposées sur la surface d'enveloppe intérieure (6) du tube carottier (5) et/ou sur la surface de la plaque de fermeture (13) tournée vers l'extrémité avant (16) et étant orientées vers l'intérieur du tube carottier (5), et
- la couronne de forage (1) présentant au moins une évacuation (14) pour évacuer des déblais hors de l'espace interne du tube carottier (5) et l'au moins une évacuation (14) étant un passage qui est réalisé dans la plaque de fermeture (13).

8. Couronne de forage selon la revendication 7, dans laquelle les tuyères de projection (2) sont orientées vers l'intérieur de la couronne de forage (1) de telle sorte que le jet tombe sur la surface d'enveloppe intérieure (6) du tube carottier (5) ou sur la plaque de fermeture (13).

9. Couronne de forage selon l'une quelconque des revendications 7 et 8, dans laquelle la direction du jet des tuyères de projection à haute pression (2) est variable.

10. Couronne de forage selon l'une quelconque des revendications 7 à 9, dans laquelle au moins une tuyère de projection à haute pression (2) est disposée sur la surface d'enveloppe intérieure (6) du tube carottier (5) derrière les éléments d'enlèvement (4), la direction du jet des tuyères de projection à haute pression (2) formant un angle β avec la normale à la surface d'enveloppe intérieure (6) au niveau de la sortie de tuyère dans une plage de - 45° à + 45° par rapport à la normale.

11. Couronne de forage selon l'une quelconque des revendications 7 à 10, dans laquelle la surface d'enveloppe extérieure du tube carottier (5) présente des renfoncements de type conduits qui s'étendent vers l'extrémité arrière (17).

12. Couronne de forage selon l'une quelconque des revendications 7 à 11, dans laquelle les alimentations (11) aux tuyères de projection à haute pression (2) sont réalisées dans la paroi du tube carottier (5) et/ou dans la plaque de fermeture (13).

13. Couronne de forage selon l'une quelconque des revendications 7 à 12, dans laquelle le tube carottier (5) présente des moyens de retenue (18) pour retenir une carotte (8) dans le tube carottier (5).

14. Couronne de forage selon l'une quelconque des revendications 7 à 13, l'au moins une tuyère de projection à haute pression (2) étant disposée au niveau du côté avant (9) du tube carottier (5) et étant orientée dans la direction de forage.

15. Dispositif pour éliminer les matières adhérant à la surface intérieure de conduits (50) au moyen de jets à haute pression, comprenant les composants suivants :
- une couronne de forage (1) selon l'une quelconque des revendications 7 à 14, qui est disposée au niveau de l'extrémité avant (16) du dispositif,
- des moyens de déplacement pour déplacer et positionner la couronne de forage (1) dans le conduit (50),
- une alimentation en milieu pour alimenter les tuyères de projection à haute pression (2) en milieu de projection (3) à haute pression,
- les moyens de déplacement ainsi que la couronne de forage (1) étant réalisés de telle sorte que tous deux puissent être positionnés et déplacés au moins le long d'un côté à distance d'une paroi de conduit (50).
